# NEUE EUROPÄISCHE PATENTSCHRIFT

(11) **EP 3 218 168 B2**
(45) Veröffentlichungstag und Bekanntmachung des Hinweises auf die Entscheidung über den Einspruch: **06.03.2024**
(45) Hinweis auf die Patenterteilung: 13.06.2018
(21) Anmeldenummer: 15801125.4
(22) Anmeldetag: 05.11.2015
(51) Int. Cl.: B29C 64/153, B22F 3/105, B33Y 30/00, B33Y 50/02, B29C 64/386

(54) **VERFAHREN UND VORRICHTUNG ZUR BELICHTUNGSSTEUERUNG EINER SELEKTIVEN LASERSINTER- ODER LASERSCHMELZVORRICHTUNG**
METHOD AND DEVICE FOR CONTROLLING THE EXPOSURE OF A SELECTIVE LASER SINTERING OR LASER MELTING DEVICE
PROCÉDÉ ET DISPOSITIF POUR COMMANDER L'EXPOSITION D'UN DISPOSITIF DE FRITTAGE OU DE FUSION LASER

(30) Priorität: 12.11.2014 DE 102014016679
(43) Veröffentlichungstag der Anmeldung: 20.09.2017
(60) Teilanmeldung: 18166334.5
(73) Patentinhaber: Concept Laser GmbH, 96215 Lichtenfels (DE)
(72) Erfinder: HERZOG, Frank, 96215 Lichtenfels (DE); BECHMANN, Florian, 96215 Lichtenfels (DE); LIPPERT, Markus, 96215 Lichtenfels (DE); HOCH, Johanna, 96151 Breitbrunn (DE)
(74) Vertreter: Hafner & Kohl PartmbB
(86) Internationale Anmeldenummer: PCT/EP2015/075832
(87) Internationale Veröffentlichungsnummer: WO 2016/075026

(56) Entgegenhaltungen:
- JP-A- 2009 006 509
- US-A1- 2003 052 105
- US-A1- 2014 263 209

## Beschreibung

Die Erfindung betrifft ein Verfahren zur Belichtungssteuerung einer selektiven Lasersinter- oder Laserschmelzvorrichtung zum Herstellen von dreidimensionalen Objekten mit den Verfahrensschritten des Oberbegriffes des Anspruches 1.

Als Stand der Technik ist es aus DE 10 2014 005 916.2 bereits bekannt, Lasersinter- oder Laserschmelzvorrichtungen, mit welchen dreidimensionale Objekte durch selektives Bestrahlen eines Baumaterials hergestellt werden können, mit einer Mehrzahl von Scannern durchzuführen. Die Scanner sind über einem Baufeld angeordnet und können entweder fest oder beweglich, d.h. über dem Baufeldbereich bereichsweise verfahrbar angeordnet werden.

Bei derartigen Mehr-Scanneranlagen ist entweder jedem Abschnitt eines Baufeldes ein gesonderter Scanner zugeordnet oder die Scanner sind derart angebracht oder ausgebildet, dass sie auch zumindest teilweise Baufeldabschnitte belichten können, die eigentlich einen anderen Scanner zugeordnet sind, um diesen anderen Scanner bei der Belichtung des ihm zugeordneten Baufeldbereiches zu unterstützen, wenn dort der Belichtungsaufwand zeitmäßig oder flächenmäßig deutlich höher ist als in dem benachbarten Baufeldabschnitt, der dann entsprechend weniger zu belichten ist. Das Dokument JP 2009 006509 A offenbart ein Verfahren gemäß dem Oberbegriff des Anspruchs 1. Der vorliegenden Erfindung liegt die Aufgabe zugrunde, ein Verfahren anzugeben, das eine Optimierung des Bauvorganges und insbesondere eine Verkürzung der erforderlichen Bauzeit für einen Gegenstand ermöglicht. Diese Aufgabe wird durch die Kombination der Merkmale des Anspruches 1 gelöst, vorteilhafte Weiterbildungen des Verfahrens finden sich in den Unteransprüchen.

Im Zuge des Verfahrens nach der Erfindung werden zunächst die Bestrahlungszeiten eines jeden einzelnen Scanners und/oder die durch diesen einzelnen Scanner erfassten Bestrahlungsflächen in einem ersten Schritt gesondert erfasst und abgespeichert. Die Erfassung der Bestrahlungszeiten kann beispielsweise durch ein Shutter-Öffnungssignal ermittelt werden, der Strahlungsenergie von einer Strahlungsquelle durchlässt, es sind aber auch andere Erfassungsmöglichkeiten denkbar, z.B. durch lichtempfindliche Elemente oder dergleichen, die bei einer Aktivierung eines Scanners ein Zeitsignal zur Verfügung stellen, das elektronisch abgespeichert werden kann.

Die Erfassung der Bestrahlungsflächen kann ebenfalls auf unterschiedliche Art und Weise erfolgen, entweder fototechnisch durch Erfassung eines Bestrahlungsbildes in einem bestimmten Zeitabschnitt oder durch Rückgriff auf ermittelte Bestrahlungszeiten und Scannerauslenkungen, so dass bestrahlte Baufeldabschnitte hinsichtlich ihrer bestrahlten Größe ermittelt werden können.

In einem zweiten Schritt werden die erfassten und abgespeicherten Bestrahlungszeitwerte und Bestrahlungsflächenwerte miteinander elektronisch verglichen. Dies kann durch eine Vergleichsvorrichtung geschehen, die in einem entsprechend geeigneten Prozessor oder Rechner integriert ist.

Stellt der Prozessor/Rechner fest, dass die Bestrahlungszeiten oder -flächen voneinander abweichen, dann wird für die nächste Schicht oder für einen nächsten Schichtabschnitt eine Neuaufteilung der durch jeden einzelnen Scanner zu bestrahlenden Oberflächenbereiche einer Pulverschicht derart festgelegt, dass die Bestrahlungszeiten für jeden einzelnen Scanner möglichst aneinander angenähert sind und/oder die Bestrahlungsfläche eines jeden einzelnen Scanners flächenmäßig möglichst weit aneinander angeglichen sind.

Dieses Verfahren wird iterativ durchgeführt, d.h. immer wieder wiederholt, damit auf schnelle Weise entsprechend auf sich während des Bauprozesses ändernde Bestrahlungsgeometrien reagiert werden kann. Die Aufteilung der Scanfelder wird jeweils nach Verfestigung einer oder mehrerer Schichten dynamisch derart angepasst, dass bei jedem nachfolgenden Bestrahlungsdurchgang die sich ergebende Belichtungszeit für jeden Scanner wenigstens annähernd gleich ist. Vor Beginn des Bauvorgangs kann eine Bedienungsperson ausgehend von auslesbaren Steuerdaten der Scanner eine Voreinstellung der Scanfelder für jeden Scanner vornehmen. Natürlich ist es auch möglich, dass eine Bedienungsperson während des Bauvorganges quasi manuell in die iterative Angleichung der Scanzeichen eingreift und ganz bewusst eine Verschiebung der Scanfelder, z.B. aus thermischen Gründen oder dergleichen.

Es sei angeregt, dass das erfindungsgemäße Verfahren auch als "Mischverfahren" durchführbar ist, d. h. dass z. B. Bestrahlungszeiten und Bestrahlungsflächen gemessen werden und z. B. aus den Bestrahlungszeiten eines ersten Scanners auf von diesem bestrahlte Flächen geschlossen wird, die mit den Bestrahlungsflächen eines zweiten Scanners verglichen werden, um die Angleichung zu erreichen.

Die Grenze zwischen den Scanfeldern von zwei Scannern kann eine Gerade sein. Sind über einem Baufeld allerdings mehr als zwei Scanner im Einsatz, kann es vorteilhaft sein, auch andere Grenzverläufe zwischen den Scanfeldern zu wählen.

Falls der Vergleich der Bestrahlungszeiten und/oder Bestrahlungsflächen betreffend einen jeden Scanner keine Verschiebung der Scanfeldgrenzen ergibt, dann ist es sehr vorteilhaft, die Grenze zwischen den Scanfeldern oszillieren zu lassen, um eine Streifenbildung auf der Oberfläche zu vermeiden.

Die erfindungsgemäße Steuerung justiert die Grenze zwischen den Scanfeldern unterschiedlicher Scanner in optimaler Weise ein. Dadurch, dass die Veränderung von Schmelzfläche und Position über einen gesamten Bauvorgang hinweg zwar groß, von Schicht zu Schicht aber meist relativ klein sind, ist die Regelung in der Lage, durch kleine inkrementale Anpassung der Scanfeldgrenze über den gesamten Bauvorgang hinweg die Bauzeit nahe an das theoretische Minimum zu bringen.

Die Erfindung ist anhand vorteilhafter Ausführungsbeispiele in den Zeichnungsfiguren näher erläutert. Diese zeigen
- Fig. 1: eine schematische Darstellung der wesentlichen Komponenten einer Vorrichtung zur Durchführung des Verfahrens;
- Fig. 2: drei Darstellungen zur Scanfeldanpassung, wobei in Fig. 2a eine (erste) Schicht n, in Fig. 2b eine weitere Schicht n+1 und in Fig. 2c eine Schicht n+2 dargestellt ist.

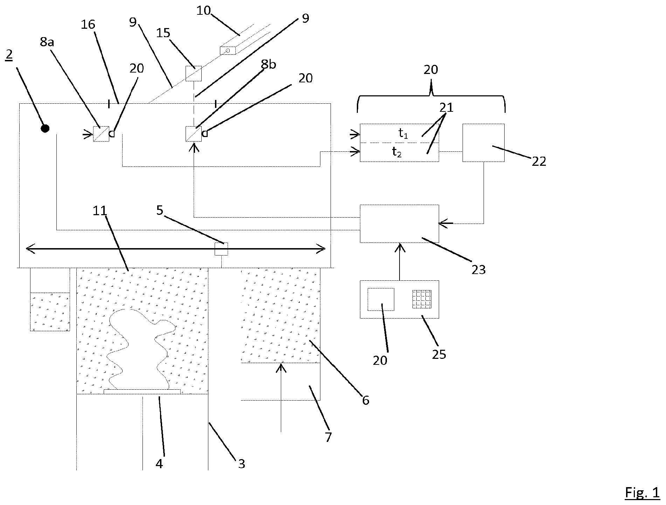

Die in Figur 1 dargestellte Vorrichtung 1 umfasst als wesentliche Komponenten eine Prozesskammer 2, in der ein Baucontainer 3 mit einer höhenverfahrbaren Bauplattform 4 angeordnet ist. Über der Bauplattform 4 ist eine Beschichteranordnung 5 angeordnet, durch welche Baumaterial 6 aus einer Dosierkammer 7 im Bereich des Baucontainers 3 in Form von dünnen Schichten aufgetragen werden kann. Über dem Baucontainer 3 ist in der Prozesskammer 2 eine Mehrzahl von Scannern 8a, 8b angeordnet, durch welche die Strahlung 9 einer Strahlungsquelle 10 in Form eines Lasers prozessgesteuert auf die Baumaterialschicht 11 gelenkt werden kann, um diese selektiv zu verfestigen.

Bei den aufgeführten Komponenten der Vorrichtung handelt es sich nur um die für die Erfindung wesentlichen Komponenten, selbstverständlich umfasst eine derartige Lasersinter oder Laserschmelzanlage eine Vielzahl weiterer Komponenten, die aber im Rahmen dieser Erfindung nicht erläutert werden müssen.

Die Vorrichtung verfügt weiterhin über eine elektronische Erfassungseinheit 20, über die Bestrahlungszeiten bezogen auf jeden Scanner 8 und/oder bei einem Bestrahlungsschritt durch einen Scanner 8 erfassten Bestrahlungsflächen gesondert erfasst werden können und in einem elektronischen Speicher 21 abgelegt werden können.

An den Speicher 21 ist eine elektronische Vergleichseinrichtung 22 angeschlossen, durch welche die abgespeicherten Bestrahlungszeitenwerte der einzelnen Scanner 8 miteinander verglichen werden können. Mit der Vergleichseinrichtung 22 ist eine Prozessoreinrichtung 23 verbunden, die im Falle von abweichenden Bestrahlungszeitenwerten der einzelnen Scanner 8 eine Neufestlegung der durch jeden einzelnen Scanner 8 zu belichtenden Oberflächenbereiche so berechnet, dass die Bestrahlungszeiten (oder die Bestrahlungsflächen) eines jeden einzelnen Scanners 8 flächenmäßig möglichst weit aneinander angeglichen sind.

Weiterhin ist in Figur 1 noch eine Eingabevorrichtung 25 mit einem Display 26 dargestellt, über die eine Bedienungsperson in den Bauprozess der Lasersinter- oder Laserschmelzvorrichtung 1 eingreifen kann.

Es sei kurz angemerkt, dass die Strahlung 9 der Strahlungsquelle 10 bei dem dargestellten Ausführungsbeispiel über einen Strahlteiler 15 geleitet wird, und von dort ein Fenster 16 im oberen Bereich der Prozesskammer 2 durchsetzt, um zu den Scannern 8a, 8b zu gelangen.

Die Erfassungseinheit 20 umfasst an den Scannern oder diesen vorgeschalteten optischen Schaltern (Shuttern) Sensorelemente, die die Bestrahlungszeiten der Scanner 8 erfassen und als zu vergleichende Bestrahlungszeitenwerte T1 und T2 im Speicher 21 ablegen. Diese Werte werden in der Vergleichseinrichtung 22 miteinander verglichen, um durch den Prozessor eine Ansteuerungsoptimierung der Scanner zu ermöglichen.

Dem Fachmann ist geläufig, dass zum einen die Bestrahlungszeitenerfassung durch eine Bestrahlungsflächenerfassung ersetzt oder ergänzt werden kann, dass der Speicher und der Vergleicher Teil eines elektronischen Systems zum Betrieb der Vorrichtung sein können und in einen Rechner oder Prozessor integriert sein können.

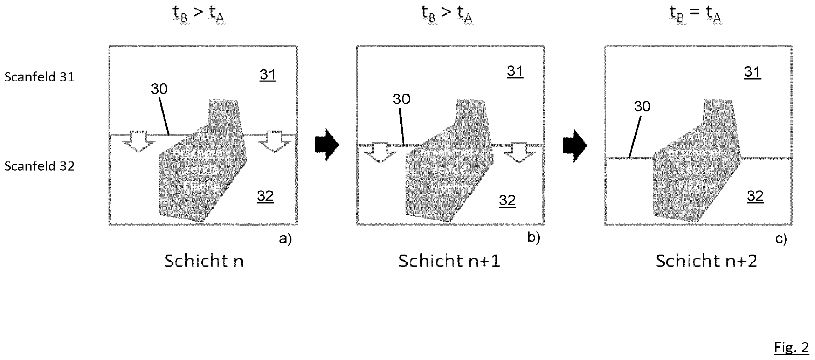

In den Figuren 2a - 2c ist nun näher dargelegt, wie die Optimierung der Scanfelder 31, 32 bzw. Bestrahlungsflächen bezogen auf die einzelnen Scanner 8a, 8b optimiert wird.

In Figur 2a ist zunächst ein Zustand dargestellt, bei dem die zu erschmelzende Fläche des Scanfeldes 32 größer ist als des Scanfeldes 31. Aus diesem Grunde ist es zweckdienlich, die Grenze 30 zwischen dem Scanfeld 31 und dem Scanfeld 32 nach unten zu verschieben, sodass bei der nächsten Schicht n+1 gemäß Figur 2b bereits eine Annäherung der Scanfelder 31, 32 vorgenommen ist.

Dieser Vorgang wird so lange wiederholt, bis tatsächlich die Scanfelder 31 und 32 gleich groß sind, d. h. die Belichtungszeiten t_{A} und t_{b} sind aneinander angeglichen, sodass beide Scanner 8a und 8b zumindest weitgehend gleich ausgelastet sind.

Ergibt die Vergleichsmessung der Bestrahlungszeiten oder Scanfeldgrößen, dass die Grenze 30 zwischen den Scanfeldern nicht verschoben werden muss, weil die Bestrahlungszeiten aneinander angeglichen sind, dann erfolgt eine Oszillation der Grenze 30 zwischen den Scanfeldern 31, 32, um eine Streifenbildung im Bauteil zu vermeiden.

### BEZUGSZEICHENLISTE

- 1: Vorrichtung
- 2: Prozesskammer
- 3: Baucontainer
- 4: Bauplattenform
- 5: Beschichteranordnung
- 6: Baumaterial
- 7: Dosierkammer
- 8: Scanner
- 9: Strahlung
- 10: Strahlungsquelle
- 11: Baumaterialschicht

- 15: Strahlteiler

- 20: Erfassungseinheit
- 21: Speicher
- 22: Vergleichseinrichtung
- 23: Prozessoreinrichtung

- 25: Eingabevorrichtung
- 26: Display

- 30: Grenze
- 31: Scanfeld
- 32: Scanfeld

## Patentansprüche

1. Verfahren zur Belichtungssteuerung einer selektiven Lasersinter- oder Laserschmelzvorrichtung zum Herstellen von dreidimensionalen Objekten, mit folgenden Verfahrensschritten:
- Bereitstellung einer selektiven Lasersinter- oder Laserschmelzvorrichtung (1), in welcher dreidimensionale Objekte durch aufeinanderfolgendes Verfestigen von Schichten eines mittels Strahlung verfestigbaren pulverartigen Baumaterials (6) an den dem jeweiligen Querschnitt des Objektes entsprechenden Stellen hergestellt werden können, wobei die bereitgestellte Vorrichtung (1) eine Bestrahlungseinrichtung zum Bestrahlen von Schichten des Baumaterials umfasst, die eine Mehrzahl von gesondert ansteuerbaren, gleichzeitig das Baumaterial bestrahlenden Scannern (8a, 8b) aufweist,
umfassend folgende Verfahrensschritte
- gesonderte Erfassung der Bestrahlungszeiten eines jeden einzelnen Scanners (8a, 8b) und/oder der durch jeden einzelnen Scanner (8a, 8b) erfassten Bestrahlungsflächen in einem ersten Schritt und Abspeicherung der erfassten Bestrahlungszeiten und/oder Bestrahlungsflächen;
- Vergleich der Bestrahlungszeiten und/oder Bestrahlungsflächen der einzelnen Scanner (8a, 8b) miteinander;
- Neufestlegung der durch jeden einzelnen Scanner zu bestrahlenden Oberflächenbereiche einer Baumaterialschicht (11) derart, dass die Bestrahlungszeiten für jeden einzelnen Scanner (8a, 8b) möglichst aneinander angenähert sind und/oder die Bestrahlungsflächen eines jeden einzelnen Scanners (8a, 8b) flächenmäßig möglichst weit aneinander angeglichen sind, wobei
die Aufteilung der Scanfelder (31, 32) jeweils nach Verfestigung einer oder mehrerer Baumaterialschichten (11) dynamisch derart angepasst wird, dass die beim nachfolgenden Bestrahlungsdurchgang sich ergebende Belichtungszeit für jeden Scanner (8a, 8b) wenigstens annähernd gleich ist, wobei die Scanfelder (31, 32) für jeden Scanner (8a, 8b) in inkrementalen Schritten aneinander angepasst werden, wobei
die Grenze (30) zwischen den Scanfeldern (31, 32) oszilliert, falls der Vergleich der Bestrahlungszeiten oder -flächen betreffend einen jeden der Scanner (8a, 8b) keine Verschiebung der Scanfeld-Grenze (30) ergibt,
**dadurch gekennzeichnet, dass**
ein Scanner (8a, 8b) im Scanfeld (31, 32) eines weiteren Scanners (8a, 8b) eine spannungsreduzierende Vorbelichtung eines Bestrahlungsabschnittes durchführt.

2. Verfahren nach Anspruch 1, **dadurch gekennzeichnet, dass** eine Bedienungsperson vor Beginn des Bauvorganges ausgehend von auslesbaren Steuerdaten der Scanner (8a, 8b) eine Voreinstellung der Größe der Scanfelder (31, 32) für jeden Scanner vornimmt.

3. Verfahren nach einem der vorhergehenden Ansprüche, **dadurch gekennzeichnet, dass** die Grenze (30) zwischen den Scanfeldern (31, 32) eine Gerade ist.

4. Verfahren nach einem der vorhergehenden Ansprüche, **dadurch gekennzeichnet, dass** dass die Belichtungszeiten einer Vorbelichtung ohne Einfluss auf die Scanfeldgrenzenverschiebung sind.

## Claims

1. A method for controlling the exposure to a selective laser sintering or laser melting device for manufacturing three-dimensional objects, comprising the following method steps:
- providing a selective laser sintering device or laser melting device (1) in which three-dimensional objects can be manufactured by successive solidification of layers of a powder-like construction material (6) that is solidifiable using radiation, at the locations corresponding to the respective cross section of the object, wherein the provided device (1) includes an irradiation device for irradiating layers of the construction material, the irradiation device having a plurality of scanners (8a, 8b) that are separately actuatable, simultaneously irradiating the construction material,
**characterized by the following method steps:**
- separately detecting the irradiation times of each individual scanner (8a, 8b) and/or the irradiation areas detected by each individual scanner (8a, 8b) in a first step, and storing the detected irradiation times and/or irradiation areas;
- comparing the irradiation times and/or irradiation areas of the individual scanners (8a, 8b) to one another;
- redetermining the surface regions of a construction material layer (11) to be irradiated by each individual scanner in such a way that the irradiation times for each individual scanner (8a, 8b) are approximated to one another to the greatest extent possible, and/or the irradiation areas of each individual scanner (8a, 8b) are matched to one another to the greatest extent possible in terms of surface area; wherein after solidification of one or more construction material layers (11), the subdivision of the scan fields (31, 32) is in each case dynamically adjusted in such a way that the exposure time that results during the subsequent irradiation pass is at least approximately the same for each scanner (8a, 8b);
wherein the scan fields (31, 32) for each scanner (8a, 8b) are adapted to one another in incremental steps; wherein
the boundary (30) between the scan fields (31, 32) oscillates if the comparison of the irradiation times or irradiation areas regarding each of the scanners (8a, 8b) indicates no displacement of the scan field boundary (30) ;
**characterized in that**
one scanner (8a, 8b) performs a tension-reduced pre-exposure of an irradiation section in the scan field (31, 32) of another scanner (8a, 8b) .

2. The method according to claim 1, **characterized in that** before the construction operation begins, an operator presets the sizes of the scan fields (31, 32) for each scanner, based on readable control data of the scanners (8a, 8b) .

3. The method according to one of the preceding claims, **characterized in that** the boundary (30) between the scan fields (31, 32) is a straight line.

4. The method according to one of the preceding claims, **characterized in that** the exposure times of a pre-exposure have no influence on the scanning field boundary displacement.

## Revendications

1. Procédé de commande d'exposition d'un dispositif sélectif de fusion au laser ou de frittage au laser pour produire des objets tridimensionnels, le procédé comprenant les étapes suivantes :
- fournir un dispositif de fusion au laser ou de frittage au laser sélectif (1) dans lequel des objets tridimensionnels peuvent être produits par solidification successive de couches d'un matériau de construction en poudre (6), solidifiable par rayonnement, à des emplacements correspondant à la section transversale respective de l'objet, le dispositif (1) fourni comportant un moyen d'irradiation, destiné à irradier des couches du matériau de construction, lequel moyen d'irradiation comprend une pluralité de scanners (8a, 8b) pouvant être commandés séparément et irradiant simultanément le matériau de construction,
**caractérisé par** les étapes suivantes
- détecter séparément les temps d'irradiation de chaque scanner individuel (8a, 8b) et/ou les surfaces d'irradiation, détectée par chaque scanner individuel (8a, 8b), dans une première étape et mémoriser les temps d'irradiation et/ou les surfaces d'irradiation détectées ;
- comparer les temps d'irradiation et/ou les surfaces d'irradiation des différents scanners (8a, 8b) entre eux ;
- redéfinir les zones de surface, destinées à être irradiées par chaque scanner individuel, d'une couche de matériau de construction (11) de telle sorte que les temps d'irradiation pour chaque scanner individuel (8a, 8b) sont approchés le plus possible les uns des autres, et/ou de telle sorte que les surfaces d'irradiation de chaque scanner individuel (8a, 8b) sont autant que possible adaptées les unes aux autres en termes de superficie, cependant la division des zones de balayage (31/32) est ajustée, à chaque fois après la solidification d'une ou de plusieurs couches de matériau de construction (11), de manière dynamique de telle sorte que le temps d'exposition à
10 lumière, obtenu lors du passage à l'irradiation suivante, est au moins à peu près le même pour chaque scanner (8a, 8b);
cependant les zones de balayage (31, 32) sont adaptées les unes aux autres par incréments pour chaque scanner (8a, 8b),
cependant la limite (30) entre les zones de balayage (31, 32) oscille si la comparaison des temps ou surfaces d'irradiation concernant chacun des scanners (8a, 8b) ne se traduit par aucun déplacement de la limite (30) entre les zones de balayage.
**caractérisé en ce que**
un scanner (8a, 8b) effectue, dans la zone de balayage (31, 32) d'un autre scanner (8a, 8b), une pré-exposition à réduction de tension d'une partie de l'irradiation.

2. Procédé selon revendication 1,
**caractérisé en ce que** un opérateur effectue, avant de commencer le processus de construction, un préréglage de la taille des zones de balayage (31, 32) pour chaque scanner à partir de données de commande extraites (8a, 8b) du scanner.

3. Procédé selon l'une des revendications précédentes, **caractérisé en ce que** la limite (30) entre les zones de balayage (31, 32) est une ligne droite.

4. Procédé selon l'une des revendications précédentes, **caractérisé en ce que** les temps d'exposition d'une pré-exposition n'ont pas d'influence sur le déplacement des limites entre les zones de balayage.
